(19) **Europäisches Patentamt / European Patent Office / Office européen des brevets**

(11) **EP 2 073 014 A1**

(12) **EUROPEAN PATENT APPLICATION**

(43) Date of publication:
   **24.06.2009 Bulletin 2009/26**

(51) Int Cl.:
   **G01N 33/68** (2006.01)      **G01N 15/02** (2006.01)

(21) Application number: **08021808.4**

(22) Date of filing: **16.12.2008**

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(30) Priority: **21.12.2007 JP 2007329584**

(71) Applicant: **Sysmex Corporation**
   **Kobe-shi, Hyogo 651-0073 (JP)**

(72) Inventor: **Shiba, Kohei**
   **Kobe-shi**
   **Hyogo 651-0073 (JP)**

(74) Representative: **HOFFMANN EITLE**
   **Patent- und Rechtsanwälte**
   **Arabellastraße 4**
   **81925 München (DE)**

(54) **Analyzer, analyzing method and computer program product**

(57)    An analyzer includes a distribution range information acquirer for obtaining distribution range information related to a particle size distribution range of a bound body of a protein and a predetermined substrate based on particle size distribution information which represents a distribution state of particle size of the bound body, wherein the bound body is obtained from a sample containing at least the protein; and a bond strength information acquirer for obtaining bond strength information related to strength of a bond of the protein and the predetermined substrate based on plurality of distribution range information obtained from a plurality of samples in which the predetermined substrate has different concentrations. An analyzing method and a computer program product are also disclosed.

FIG.10

**Description**

FIELD OF THE INVENTION

The present invention relates to an analyzer, analyzing method and computer program product specifically relates to an analyzer, analyzing method and computer program product for determining an indicator which represents the bonding state between a protein and a bonding substance (substrate) which specifically bonds to the protein.

BACKGROUND

Analyzers are known which detects the Brownian movement of particles from scattered light and determines an indicator that represents the bonding state between a protein and a bonding substance based on the intensity of the scattered light (for example, refer to Japanese Laid-Open Patent Publication No. 2007-57383).

In the analyzer disclosed in Japanese Laid-Open Patent Publication No. 2007-57383, a complex substrate (polymer) is used as the bonding substance (substrate), and the indicator which represents the bonding state between the protein and the substrate complex is determined based on the intensity of the scattered light.

However, although the analyzer disclosed in Japanese Laid-Open Patent Publication No. 2007-57383 has the capability of determining an indicator which represents the bonding state between a protein and a substrate complex (polymer), this analyzer cannot determine an indicator which represents the bonding state between a protein and a simple substrate (monomer). It is therefore desirable to have an analyzer that is capable of determining the natural bonding state near the *in vivo* state, that is, capable of determining an indicator which represents the bonding state between a protein and a simple substrate (monomer).

SUMMARY OF THE INVENTION

The scope of the present invention is defined solely by the appended claims, and is not affected to any degree by the statements within this summary.

A first aspect of the present invention is an analyzer comprising: a distribution range information acquirer for obtaining distribution range information related to a particle size distribution range of a bound body of a protein and a predetermined substrate based on particle size distribution information which represents a distribution state of particle size of the bound body,

wherein the bound body is obtained from a sample containing at least the protein; and a bond strength information acquirer for obtaining bond strength information related to strength of a bond of the protein and the predetermined substrate based on plurality of distribution range information obtained from a plurality of samples in which the predetermined substrate has different concentrations.

A second aspect of the present invention is an analyzing method comprising: (a) for obtaining distribution range information related to a particle size distribution range of a bound body of a protein and a predetermined substrate based on particle size distribution information which represents a distribution state of particle size of the bound body, wherein the bound body is obtained from a sample containing at least the protein; and (b) obtaining bond strength information related to strength of a bond of the protein and the predetermined substrate based on plurality of distribution range information obtained from plurality of samples in which the predetermined substrate has different concentrations.

A third aspect of the present invention is a computer program product, comprising: a computer readable medium; and instructions, on the computer readable medium, adapted to enable a general purpose computer to perform operations, comprising: (a) for obtaining distribution range information related to a particle size distribution range of a bound body of a protein and a predetermined substrate based on particle size distribution information which represents a distribution state of particle size of the bound body,

wherein the bound body is obtained from a sample containing at least the protein; and (b) obtaining bond strength information related to strength of a bond of the protein and the predetermined substrate based on plurality of distribution range information obtained from plurality of samples in which the predetermined substrate has different concentrations.

BRIEF DESCRIPTION OF THE DRAWINGS

Fig. 1 is a perspective view showing the general structure of an embodiment of the protein analyzer of the present invention;
FIG. 2 is a block diagram of the main body of the protein analyzer of the embodiment shown in FIG. 1;
FIG. 3 is a perspective view of the detection cell used in the protein analyzer of the embodiment shown in FIG. 1;

FIG. 4 is a schematic view showing the movable lens of the main body of the protein analyzer of the embodiment shown in FIG. 1;

FIG. 5 is a schematic view showing the movable lens of the main body of the protein analyzer of the embodiment shown in FIG. 1;

Fig. 6 is a block diagram of the control device of the protein analyzer of the embodiment shown in Fig. 1;

FIG. 7 is a flow chart showing the controls performed by the CPU of the control device and the apparatus main body via the analysis application program of the protein analyzer of the embodiment shown in FIG. 1;

FIG. 8 is a particle size distribution graph prepared by the protein analyzer of the embodiment shown in FIG. 1;

FIG. 9 is a flow chart showing the controls performed by the CPU of the control device and the apparatus main body via the $K_{pd}$ application program of the protein analyzer of the embodiment shown in FIG. 1;

FIG. 10 is a Pd-C graph prepared by the protein analyzer of the embodiment shown in FIG. 1;

FIG. 11 is a particle size distribution graph prepared by the protein analyzer of the embodiment shown in FIG. 1;

FIG. 12 is a Pd-C graph prepared by the protein analyzer of the embodiment shown in FIG. 1; and

FIG. 13 is a particle size distribution graph prepared by the protein analyzer of the embodiment shown in FIG. 1.

DETAILED DESCRIPTION OF THE PREFERRED EMBODIMENTS

The preferred embodiments of the present invention will be described hereinafter with reference to the drawings. The embodiment of the present invention is described below based on the drawings.

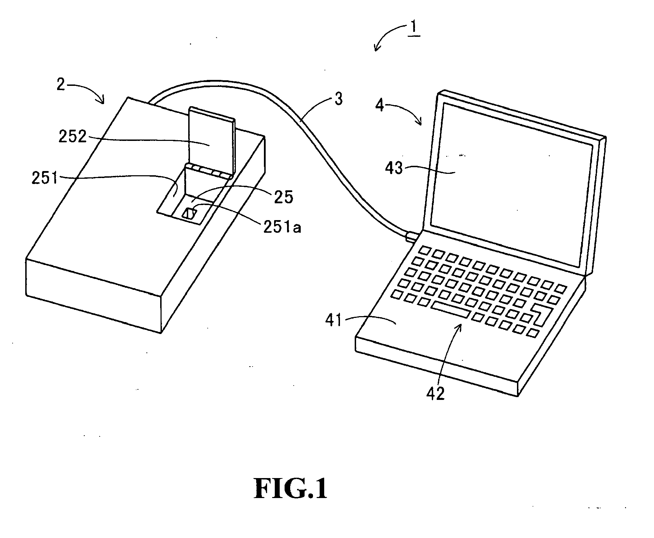

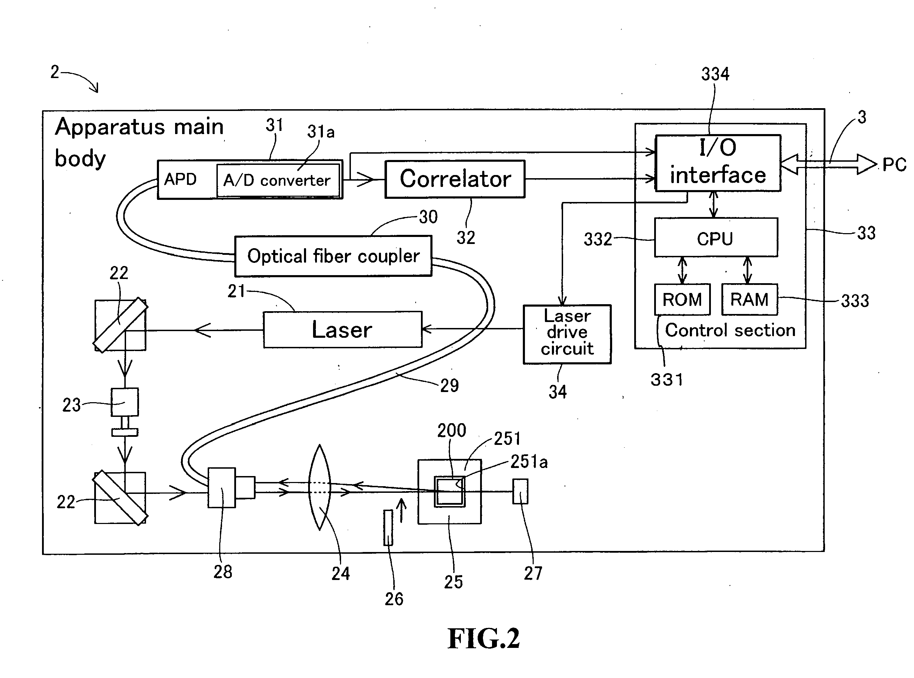

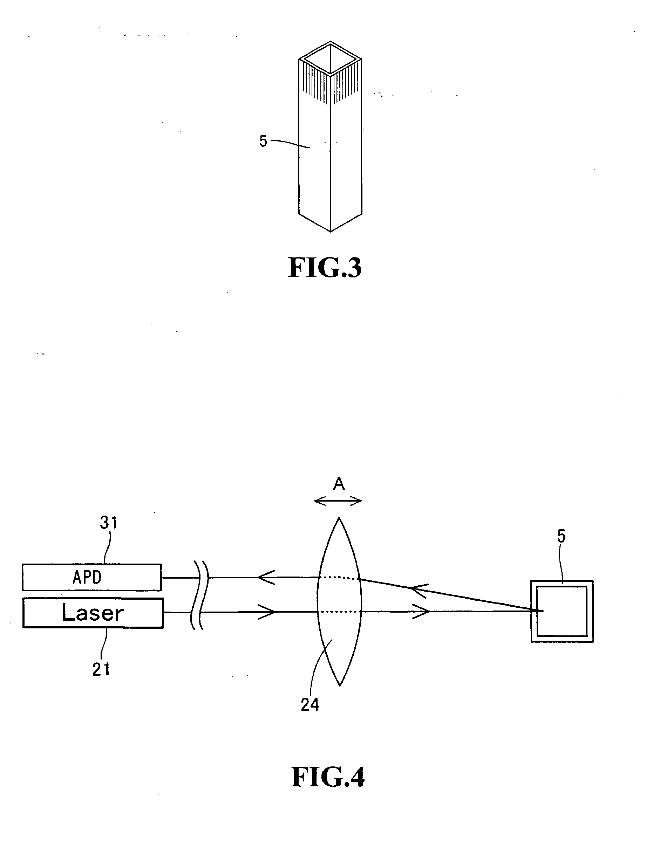

FIG. 1 is a perspective view showing the general structure of and embodiment of the protein analyzer of the present invention, and FIG. 2 is a block diagram of the main body of the protein analyzer of the embodiment shown in FIG. 1. FIGS. 3 through 6 illustrate the structure of the protein analyzer of the embodiment shown in FIG. 1. The structure of an embodiment of the protein analyzer 1 of the present invention is first described below with reference to Figs. 1 through 6.

The protein analyzer 1 of the embodiment of the present invention is an apparatus for determining an indicator which represents the bonding state between a protein and a substrate based on the intensity of the scattered light detected from the protein and the substrate (bonding substance) which specifically bonds to the protein moving with a Brownian motion within a solvent. The analyzer 1 of the present embodiment is configured by an apparatus main body 2, and a control device (PC) 4 which is connected to the main body 2 by a USB cable 3. Note that the main body 2 and the control device 4 may also be configured so as to be capable of wireless communication.

The apparatus main body 2 shown in FIG. 1 has the functions of detecting the intensity of the scattered light from a measurement sample contained in the detection cell by irradiating laser light on the detection cell 5 (refer to FIG. 3) which contains and reacts measurement sample that includes the protein and the substrate, and obtaining an auto-correlation function G2 ($\tau$) to be described later and which is determined based on the scattered light intensity. Note that in the present embodiment the scattered light intensity is detected using the backward scattered light which is reflected in the opposite direction to the direction of travel of the laser light irradiating the measurement sample contained in the detection cell 5. As shown in FIG. 2, the main body 2 is configured by a laser 21, a plurality of mirrors 22, attenuator 23, movable lens 24, measuring section 25, light shield 26, absorber 27, collective optical section 28, optical fiber 29, optical fiber coupler 30, avalanche photodiode (APD) 31, correlator 32, control unit 33, and laser drive circuit 34.

The laser 21 is provided for irradiating laser light on the detection cell 5 which contains the measurement sample. The laser light emitted from the laser 21 is He-Ne laser light which has a frequency of 633 (nm). The plurality of mirrors 22 also are disposed at predetermined positions so that the laser light emitted from the laser 21 travels toward the detection cell 5 which is maintained in the measuring section 25.

The attenuator 23 has the function of regulating the amount of laser light emitted from the laser 21. Specifically, when the measurement sample contained in the measurement cell 5 has a high concentration, and when there is dispersion of particle size of the protein contained in the measurement sample, the amount of attenuation applied by the attenuator 23 is increased to reduce the amount of laser light emitted from the laser 21 so as to increase the intensity of the scattered light obtained from the measurement sample contained in the measurement cell 5. Furthermore, when the measurement sample contained in the measurement cell 5 has a low concentration, and when the particles contained in the measurement sample are extremely small, the amount of attenuation applied by the attenuator 23 is reduced to increase the amount of laser light emitted from the laser 21 so as to reduce the intensity of the scattered light obtained from the measurement sample contained in the measurement cell 5.

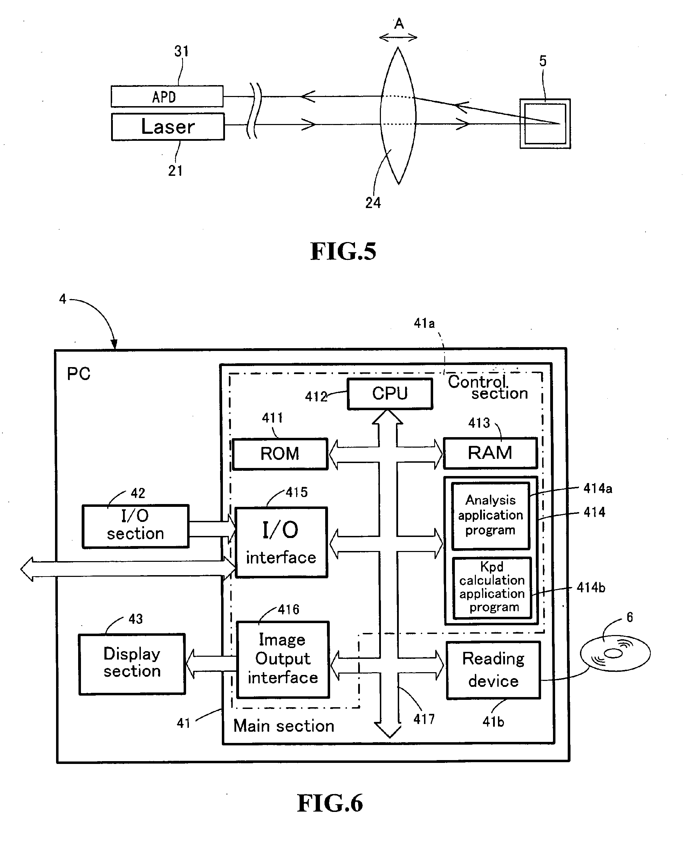

As shown in FIGS. 4 and 5, the movable lens 24 is provided for collecting the laser light emitted from the laser 21 on the measurement sample contained in the detection cell 5. The movable lens is provided so as to be movable in the direction (A direction in FIGS. 4 and 5) along the travel direction of the laser light advancing toward the detection cell 5. For this reason, when a high concentration measurement sample is contained in the detection cell 5, it is possible to move the focus position of the laser light collected by the movable lens 24 to the movable lens 24 side of the detection cell 5 by moving the movable lens 24 to the laser 21 side, as shown in FIG. 4. As a result, it is possible to reduce the intensity of the backward scattered light being scattered. When a low concentration measurement sample is contained in the detection cell 5, it is also possible to move the focus position of the laser light collected by the movable lens 24 to the absorber 27 (refer to FIG. 2) side (to be described later) of the detection cell 5 by moving the movable lens 24 to the detection cell 5 side, as shown in FIG. 5. As a result, it is possible to increase the intensity of the backward scattered light being scattered. It is therefore possible to detect the intensity of the scattered light by the avalanche photodiode (APD) 31 independent from the concentration of the measurement sample contained in the detection cell 5. The movable lens 24 also has the function of rendering the scattered light which is reflected in the opposite direction to the direction of travel of the laser light into parallel rays. In this way the scattered light obtained from the measurement sample is guided to the collective optical section 28, which is described later.

As shown in FIGS. 1 and 2, the measuring section 25 is provided with a cell accepting part 251 which includes a cell holding orifice 251a for holding the detection cell 5 that contains the measurement sample. The measuring section 25 is provided with a cover 252 (refer to FIG. 1) so that external light cannot enter the detection cell 5 maintained in the cell holding orifice 251a of the cell accepting part 251 during measurements. Therefore, the inside part of the cell accepting part 251 is in a state in which the external light is blocked from entering when the cover 252 is closed and the detection cell 5 which contains the measurement sample is maintained in the cell holding orifice 251a. In this way it is possible to perform the measurement under conditions in which external light is blocked. As shown in FIG. 2, the light shield 26 is provided so as to move between the measuring section 25 and the movable lens 24 in linkage with the opening and closing operation of the cover 252 of the measuring section 25. The light shield 26 is configured so as to be disposed to block the laser light emitted from the laser 21 from entering the detection cell 5 when the cover 252 of the measuring section 25 is in the open condition, and to be removed from the laser light optical path to allow the laser light to enter the detection cell 5 when the cover 252 of the measuring section 25 is in the closed condition.

The absorber 27 is disposed to face the movable lens 24 with the measuring section 25 holding the detection cell 25 interposed therebetween so as to absorb the light transmitted through and not reflected by the measurement sample contained in the detection cell 25. In this way it is possible for only the backward scattered light scattered by the measurement sample contained in the detection cell 25 to travel in the direction of the movable lens 24 side.

The collective optical section 28 is provided for irradiating the measurement sample contained in the detection cell 5 and guiding the reflected scattered light (backward scattered light) to the optical fiber 29. The optical fiber 29 is provided for propagating the scattered light guided by the collective optical section 28 through the optical fiber coupler 30 to the avalanche photodiode (APD) 31.

The avalanche photodiode (APD) 31 has the functions of detecting the scattered light (analog signals) obtained by irradiating laser light on the measurement sample contained in the detection cell 5, and converting the detected scattered light to electrical signals (digital signals) using an A/D converter 31a. The converted electrical signals (digital signals) are then stored in a RAM 333 of the control unit 33 which is described later as scattered light intensity data at elapsed time intervals. The avalanche photodiode 31 also has the function of amplifying the detected scattered light, so that even the weak signals produced from the scattered light detected from the measurement sample can be amplified.

The correlator 32 has the function of outputting an autocorrelation function G2 ($\tau$) which is defined by equation (1) below based on the scattered light intensity data detected by the avalanche photodiode 31 at elapsed time intervals.

$$G2 \ (\tau) \ = \ \langle I(t) \ \times \ I(t+\tau) \rangle / \langle I(t) \rangle^2 \qquad\qquad (1)$$

Note that the autocorrelation function G2 ($\tau$) defined by equation (1) above is a function which specifies the parameters of the elapsed time interval $\tau$ (micro seconds) from time t, and the scattered light intensity data I(t) at time t. The autocorrelation function G2 (() represents, as a function of time, the degree of protein overlap each time the protein position changes in conjunction with a change in time from the protein position at a specific standard time when the position of the protein contained in the detection cell 5 changes due to Brownian motion; the autocorrelation function G2 (() decreases and approaches zero as described in equation (1) since the autocorrelation function G2 (0)=1 when the proteins completely overlap at (=0 and the degree of protein overlap decreases with the passage of time.

The autocorrelation function G2 (() is used to evaluate the size of the particles which move with Brownian motion in the solvent. In the initial stage of bonding or the state in which the protein and the substrate contained in the detection cell 5 are not bonded, the protein and substrate are particles of low molecular weight and move with an active Brownian motion within the solvent. The laser light irradiating the low molecular weight particles which actively move in a Brownian motion are therefore detected by the avalanche photodiode 31 as violently fluctuating scattered light intensity data caused by the Brownian motion of the particles. Conversely, in the end stage of bonding or the state in which the protein and the substrate contained in the detection cell 5 are bonded, the protein and substrate are particles of high molecular weight and move with a mild Brownian motion within the solvent. The laser light irradiating the particles high molecular weight particles which mildly move in a Brownian motion are therefore detected by the avalanche photodiode 31 as mildly fluctuating scattered light intensity data caused by the Brownian motion of the particles. In this way the autocorrelation function G2 (() which relates to the low molecular weight particles rapidly decreases (attenuates), and the autocorrelation function G2 (() which relates to the high molecular weight particles slowly decreases (attenuates).

The correlator 32 obtains the scattered light intensity data detected by the avalanche photodiode 31 every 0.5 nsec (minimum sampling time), and outputs the autocorrelation function G2 (() which is defined by equation (1). The value of the autocorrelation function G2 (() is obtained at the elapse of each time interval and includes the value G2 (0.5) of the autocorrelation function G2 (() after 0.5 nsec (minimum sampling time) has elapsed since the time t.

The control unit 33 has the function of causing the emission of laser light and oscillating the laser 21 by controlling the laser 21 through the laser drive circuit 34, as shown in FIG. 2. The control unit 33 is configured by a ROM 331, CPU 332, RAM 333, and input/output interface 334.

The ROM 331 stores a control program for controlling the analysis operation performed by the apparatus main body 2, and the data (control signals and the like for oscillating the laser 21) required to execute the control program. The CPU 332 is provided to load the control program stored in the ROM 331 into the RAM 333, and directly execute the control program from the ROM 331. The CPU 332 can thus control the analysis operation performed by the apparatus main body 2 by executing the control program. The data processed by the CPU 332 is transmitted to each part of the apparatus main body 2, or to the control device (PC) 4 (refer to FIG. 6) through the input/output interface 334. The data required for the processing by the CPU 332 is received from each part of the apparatus main body 2 or the control device (PC) 4 through the input/output interface 334. For example, the control signals stored in the ROM 331 which are called by the CPU 332 are transmitted to the laser 21 through the input/output interface 334 and the laser drive circuit 34. The CPU 332 also has the function of storing, in the RAM 333, the scattered light intensity data of each elapsed time interval detected by the avalanche photodiode 31, and the value of the autocorrelation function G2 (() of each elapsed time interval obtained by the correlator 32.

The control device (PC) 4 is provided to receive the autocorrelation function G2 (() and scattered light intensity data sent from the main body 2 through the USB cable 3, and to determine an indicator related to the strength of the bond between the protein and the substrate based on the received scattered light data and the autocorrelation function G2 ((). The control device 4 also is configured by a main section 41, input section 42, and display section 43 as shown in FIGS. 1 and 6.

As shown in FIG. 6, the main section 41 is configured by a control unit 41a which includes a ROM 411, CPU 412, RAM 413, hard disk 414, input/output interface 415, and image output interface 416, and a reading device 41b, and these parts are connected via a bus 417 so as and the analysis application program 414a stored on the hard disk 414.

The hard disk 414 has an operating system, the analysis application program 414a for analyzing protein (described later), and the Kpd calculation application program 414b installed thereon, and also stores the data (scattered light intensity data and autocorrelation function G2 (()) required to execute the analysis application program 414a and the Kpd calculation application program 414b.

The input/output interface 415 is configured by, for example, a serial interface such as USB, IEEE1394, RS-235C or the like, a parallel interface such as SCSI, IDE, IEEE1284 or the like, or an analog interface such as a D/A converter, A/D converter or the like. The input section 42 is connected to the input/output interface 415. The input/output interface 415 is also connected to the input/output interface 334 of the control unit 33 of the apparatus main body 2 through the USB cable 3, and can input the autocorrelation function G2 (() and the scattered light intensity data detected by the main body 2 to the control device 4. The image output interface 416 is connected to the display section 43 which is configured by an LCD (liquid crystal display), CRT or the like, and is configured so as to output image signals corresponding to the image data received from the CPU 412 to the display section 43. to be capable of data communication.

In the present embodiment, the control unit 41a has the function of obtaining the particle size distribution information of the scattered light intensity based on the autocorrelation function G2 (() and the scattered light intensity data sent from the apparatus main body 2 through the input/output interface 334 (refer to FIG. 2). The control unit 41a also has the function of obtaining the bond strength information related to the strength of the bond between the protein and the substrate, and obtaining the distribution range information of the particle size of the bound body of the protein and substrate based on the obtained particle size distribution information.

The ROM 411 of the control unit 41a is configured by a mask ROM, PROM, EPROM, EEPROM or the like. The CPU 412 is provided to execute a Kpd calculation application program 414b for determining a bond constant Kpd as bond strength information relating to the strength of the bond between the protein and the substrate, and an analysis application program 414a for analyzing the protein and which is installed on the hard disk 414 (described later) and loaded in the RAM 413. The RAM 413 is also configured by an SRAM, DRAM or the like, and is used when reading the analysis application program 414a and computer program stored on the hard disk 414 (described later) and in the ROM 411. The RAM 413 is also used as the work area of the CPU 412 when the CPU 412 executes the Kpd calculation application program 414b

The reading device 41b is configured by a floppy disk drive, CD-ROM drive, DVD-ROM drive or the like, and is capable of reading computer programs and data stored on a portable recording medium 6. In this way, for example, the analysis application program 414a and Kpd calculation application program 414b can be read from the portable recording medium 6 using the reading device 41b, and the read the analysis application program 414a and Kpd calculation application program 414b can then be installed on the hard drive 414. Note that the analysis application program 414a, Kpd calculation application program 414b, and other computer programs used by the control device 4 are not provided only by the portable recording medium 6 inasmuch as such programs may also be provided in the present embodiment through an electrical communication line (either wired or wireless) from an external PC or the like connected to the control device 4 so as to be capable of communication. For example, the analysis application program 414a and Kpd calculation application program 414b may also be stored on the hard disk of a server computer on the Internet, and the control device 4 of the present embodiment can access the server computer and download the analysis application program 414a and Kpd calculation application program 414b over the electrical communication line, then install the downloaded analysis application program 414a and Kpd calculation application program 414b on the hard disk 414. An operating system which provided a graphical user interface such as, for example, Microsoft windows (registered trademark) or the like is also installed on the hard disk 414. Note that the analysis application program 414a and Kpd calculation application program 414b of the present embodiment operate on such an operating system.

The input section 42 is configured so as to be capable of inputting data to the control device 4 when a user uses the input section 42.

The display section 43 is provided to display images (screens) in conjunction with image signals input from the image output interface 416.

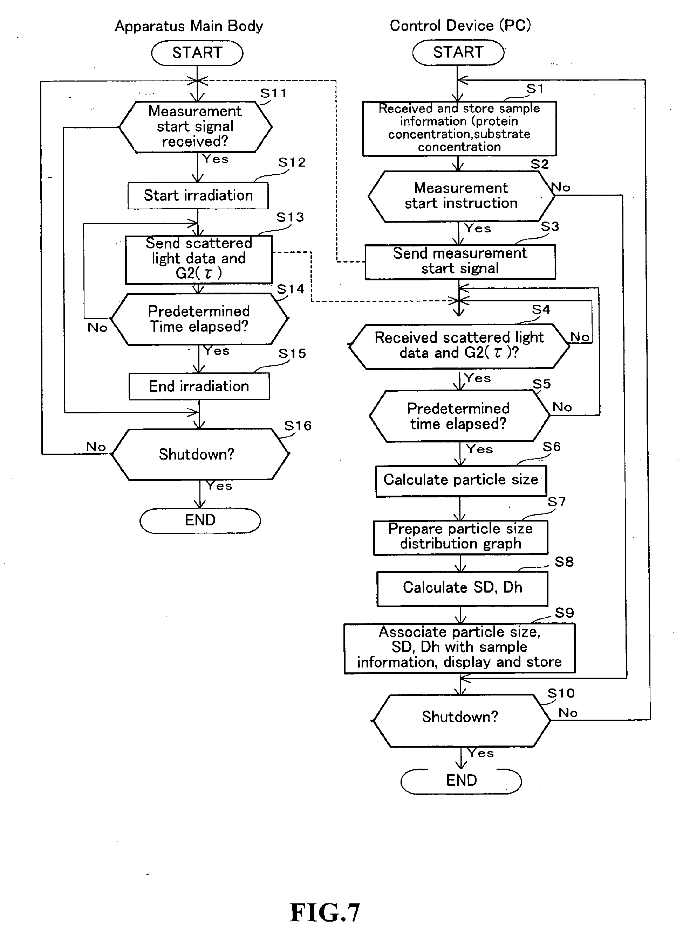

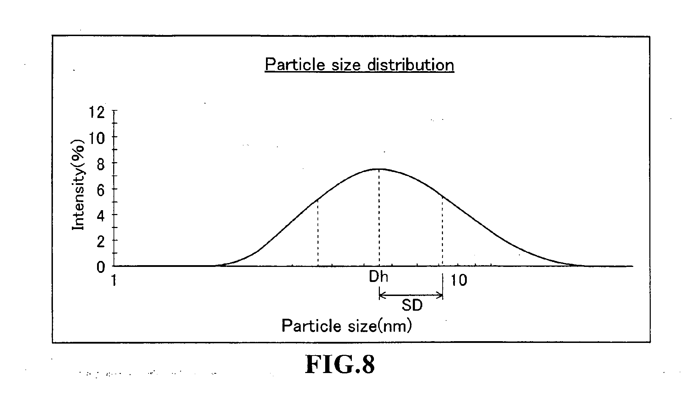

FIG. 7 is a flow chart showing the controls performed by the CPU of the control device and the apparatus main body by the analysis application program of the protein analyzer of the embodiment shown in FIG. 1. FIG. 8 is a particle size distribution graph prepared by the protein analyzer of the embodiment shown in FIG. 1. The control flow performed by the CPU 33 and 412 of the control device 4 and the apparatus main body 2 via the analysis application program 414a of the protein analyzer 1 of the embodiment of the present invention is described in detail below with reference to FIGS. 7 and 8.

In step S1, sample information such as the protein concentration C (protein; nmol), substrate concentration C (nmol) and the like are input by the user on the control device 4 side, and the sample information is stored in the RAM 413 or on the hard disk 414. are transmitted by the CPU 332 of the apparatus main body 2 to the control device 4 through the input/output interface 334. In the subsequent step S14, the CPU 332 determines whether or not a predetermined time has elapsed, and when the predetermined time has elapsed the laser irradiation of the detection cell 5 is stopped in step S15. When the predetermined time has not elapsed, The measurement operation after the laser light output has started, and the transmission of the scattered light intensity data and the autocorrelation function G (() to the control device 4 continues. In step S16, the CPU 332 determines whether or not a shutdown instruction has been received from the user; the operation ends when the shutdown instruction has been received, and the routine moves to step S11 when the shutdown instruction has not been received.

In step S4 the CPU 412 on the control device 4 side determines whether or not the scattered light data and the autocorrelation function G (() transmitted from the apparatus main body 2 has been received through the input/output interface 415. When the data have not been received, the determination is repeated until the data are received; then when the data have been received a determination is made in step S5 as to whether or not the predetermined time has elapsed. When the predetermined time has not elapsed, the operations of steps S4 and S5 are repeated until the predetermined time has elapsed. When the predetermined time has elapsed, the CPU 412 calculates the particle size (diameter) d (nm) of the protein and the In step S2, the CPU 412 then determines whether or not the user has issued a measurement start instruction; when no instruction has been issued, the routine moves to step S10. When a start instruction has been issued, a measurement start signal which starts the measurement is transmitted to the apparatus main body 2 by the CPU 412 through the input/output interface 415 in step S3.

In step S11, on the control device 4 side a determination is made as to whether or not the measurement start signal transmitted from the control device 4 has been received through the input/output interface 334, and when the signal has not been received the routine moves to step S16. When the measurement start signal has been received, the laser 21 is oscillated and laser light is emitted based on the control signal from the control unit 33 in step S12. In this way the detection cell 5 is irradiated by laser light, and the backward scattered light from the detection cell 5 is received by the avalanche photodiode 31. An electrical signal corresponding to the scattered light intensity is then output from the avalanche photodiode 31 to the A/D converter 31a, and after this electrical signal is subjected to A/D conversion, the scattered light intensity data are sent from the A/D converter 31a to the correlator 32 per unit time. The CPU 332 then stores the scattered light intensity data output from the avalanche photodiode 31 and the autocorrelation function G (() output from the correlator 32 to the RAM 333. In step S13, the autocorrelation function G (() and the scattered light intensity data bound body of the protein and substrate in step S6 using photon correlation spectroscopy (PSC) based on the received scattered light data and the autocorrelation function G2 ((). In step S7, a particle size distribution graph is prepared which represents the particle size distribution according to the scattered light intensity fitted to a Gaussian curve using photon correlation spectroscopy, as shown in FIG. 8 using

Then, the CPU 412 receives the peak particle size Dh (nm) which represents the peak of the particle size distribution graph and the standard deviation SD (nm) from the particle size distribution graph as particle size distribution information in step S8, and the information related to the obtained particle size d (nm), peak particle size Dh (nm), and the standard deviation SD (nm) are associated with the sample information and displayed on the display section 42 in step S9. The information related to particle size d (nm), standard deviation D (nm), and peak particle size Dh (nm) is associated with the sample information and stored in the RAM 413 or on the hard disk 414. Note that the standard deviation SD (nm) and peak particle size Dh (nm) on the particle size distribution graph are as shown in FIG. 8. In step S10, the CPU 412 determines whether or not a shutdown instruction has been received from the user; the operation ends when the shutdown instruction has been received, and the routine moves to step S1 when the shutdown instruction has not been received.

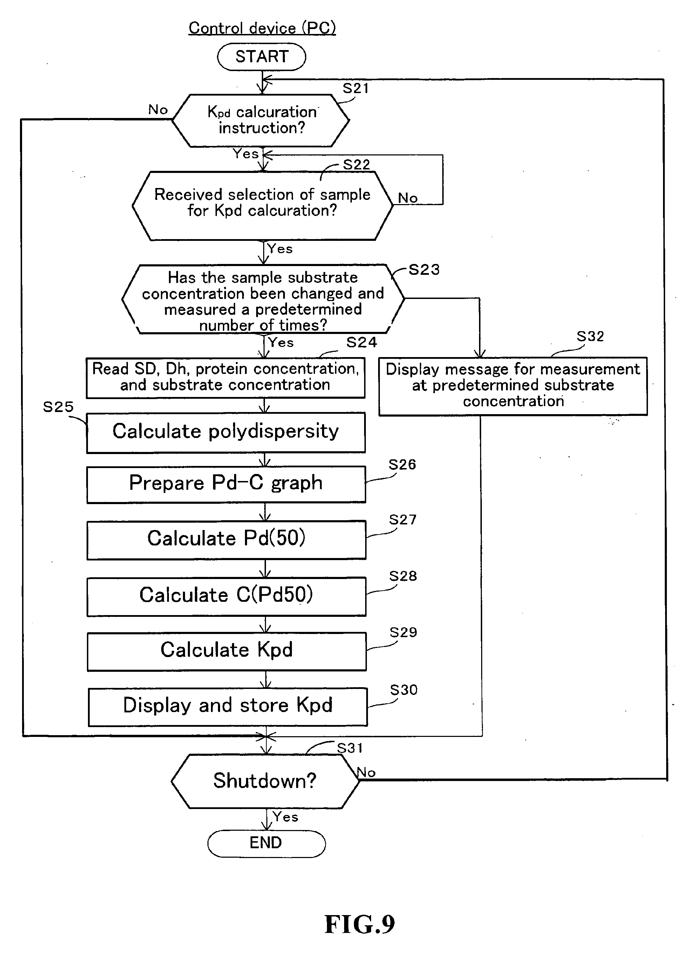

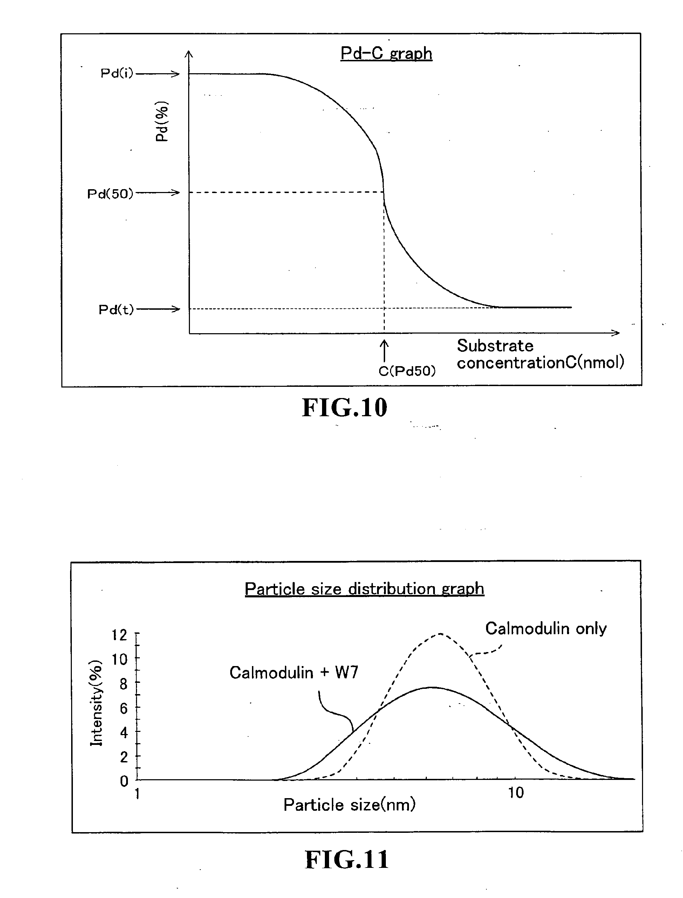

FIG. 9 is a flow chart showing the controls performed by the CPU of the control device and the apparatus main body by the Kpd calculation application program of the protein analyzer of the embodiment shown in FIG. 1. FIG. 10 is a Pd-C graph prepared by the protein analyzer of the embodiment shown in FIG. 1. The control flow performed by the CPU 332 and 412 of the control device 4 and the apparatus main body 2 via the Kpd calculation application program 414b of the protein analyzer 1 of the embodiment of the present invention is described in detail below with reference to FIGS. 9 and 10.

In step S12, the CPU 412 determines whether or not an instruction to calculate the bonding constant Kpd has been received from the user. The routine moves to step S31 when an instruction has not been received, and when an instruction has been received the CPU 412 determines whether or not the selection of the sample (combination of the protein and the substrate) for which the bonding constant Kpd is to be calculated has been received from the user in step S22. Note that the user may issue an instruction to calculate the bonding constant Kpd and select the sample for which the bonding constant Kpd is to be calculated while viewing a screen displayed on the display section 43.

The determination of step S22 repeats the sample selection until the user selects a sample; in step S23 the CPU 412 determines whether or not samples of different concentrations of substrate have been measured more than a predetermined number of times. That is, the CPU 412 determines whether or not the measurement data has been obtained which are required to satisfy a predetermined accuracy of the Pd-C graph that represents the relationship between the substrate concentration C (nmol) and the polydispersity (%)(referred to hereinafter as "Pd" ) which is described later. When measurements have not been performed in excess of the predetermined number, the CPU 412 displays a message to performs measurements to the predetermined substrate concentration on the display section 43 in step S32, then the routine moves to step S31. The bonding constant Kpd may be calculated when the user performs the measurement to the predetermined substrate concentration in accordance with the message. When the measurements are performed in excess of the predetermined number, the in step S24 the CPU 412 respectively reads the standard deviation SD (nm), peak particle size Dh (nm), protein concentration C (nmol), and substrate concentration C (nmol) for each substrate concentration of the object sample stored in the RAM 413 or hard disk 414.

In the present embodiment, Pd (%) is calculated by the CPU 412 in step S25. Note that Pd is the particle size distribution range information of the bound body of the protein and substrate, and Pd is defined by equation (1) below in the present embodiment.

$$Pd \ (\%) \ = \ SD/Dh \, (100 \tag{1}$$

In step S26, the CPU 412 prepares the Pd-C graph which represents the relationship between the Pd (%) and the substrate concentration C (nmol), as shown in FIG. 10. The specific preparation process is to prepare the Pd-C graph as shown in FIG. 10 by plotting a plurality of Pd (%) in the substrate concentrations obtained in step S25 in the graph, and fitting the data in the sigmoid function f(x). The Pd-C graph indicates a trend of decreasing Pd (%) values as the substrate concentration C (nmol) increases.

In the subsequent step S27, the average value Pd(50) of the Pd(i) and Pd(t) is calculated by the CPU 412. In the Pd-C graph shown in FIG. 10, Pd(i) is the value of Pd when the slope of the graph at the smallest region of substrate concentration C (nmol) essentially becomes zero (df(x)/dx=0). In the Pd-C graph shown in FIG. 10, Pd(t) is the value of Pd when the slope of the graph at the largest region of substrate concentration C (nmol) essentially becomes zero (df(x)/dx=0). Pd(i) represents Pd in the state before the start or the state immediately after the start of the binding reaction between the protein and the substrate. Therefore, the value of Pd represents the state of progress of the bonding reaction between the protein and the substrate, and progress of the bonding reaction is indicated when the value of Pd is small, rather than when the value is large. Note that the calculation of Pd(50) is accomplished by equation (2) below.

$$Pd(50) = (Pd(i) + Pd(t))/2 \qquad\qquad (2)$$

In step S28, the CPU 412 then determines the substrate concentration C (Pd50) corresponding to the Pd(50) from the Pd-C graph. In step S29, the CPU 412 calculates the bonding constant $K_{pd}$ which is an indicator related to the strength of the bond between the protein and the substrate based on substrate concentration C (Pd50) and the protein concentration C (protein). In this case the bonding constant $K_{pd}$ is defined by equation (3) below.

$$K_{pd} = C(Pd50)/C(protein) \qquad\qquad (3)$$

Then in step S30, the CPU 412 displays the calculated bonding constant $K_{pd}$ on the display section 43, and stores the bonding constant $K_{pd}$ in the RAM 413 or hard disk 414. In the subsequent step S31, the CPU 412 determines whether or not a shutdown instruction has been received from the user; the operation ends when the shutdown instruction has been received, and the routine moves to step S21 when the shutdown instruction has not been received.

EXAMPLES

Example 1

Experiments were then conducted to calculate the bonding constant $K_{pd}$ by the $K_{pd}$ calculation application program 414b of the protein analyzer 1 of the above described embodiment of the present invention. These experiments are described below.

The experiment of example 1 is outlined below. The measurement temperature in the apparatus main body 2 was 25(C. The measurement time was 10 seconds, and the average value of five measurement results was used. The laser output was a 4 mW He-Ne laser (633 nm). Furthermore, calmodulin (CaM) prepared at 1 mg/mL was used as the protein, and 0.4 M of W7 (N-(6-aminohexyl)-5-chloro-1-naphthalenesulfoamide) was used as the substrate. A buffer solution of 20 mM tris, 2mM CaC12, and 150 mM NaCl (pH7.5) was also used.

[Comparison of Pd(%) with and without Added Substrate]

FIG. 11 is a particle size distribution graph prepared by the protein analyzer of the embodiment shown in FIG. 1. The particle size distribution graph of FIG. 11 shows the particle size distribution of a sample containing only calmodulin (CaM) prepared at 1 mg/mL, and a sample in which 0.4 mM of W7 was added to the calmodulin (CaM) prepared at 1 mg/mL. Table 1 below shows the results of the CPU 412 calculation of the peak particle size Dh (nm) and standard deviation SD (nm) of each sample. In addition to the standard deviation SD (nm) and peak particle size Dh (nm), the Pd (%) calculated from equation (1) is also shown in Table 1.

**Table 1**

| Sample | Dh (nm) | SD (nm) | Pd (%) |
|---|---|---|---|
| Only CaM | 6.862 | 2.483 | 36.18 |
| CaM+20 nmol W7 | 6.714 | 1.668 | 24.84 |

As shown in Table 1, the Pd(%) (=24.84) of the sample containing W7 added to the calmodulin is smaller than the Pd(%) (=36.18) of the sample containing calmodulin alone.

[Analysis of the Change in Pd(%) by W7 Titration]

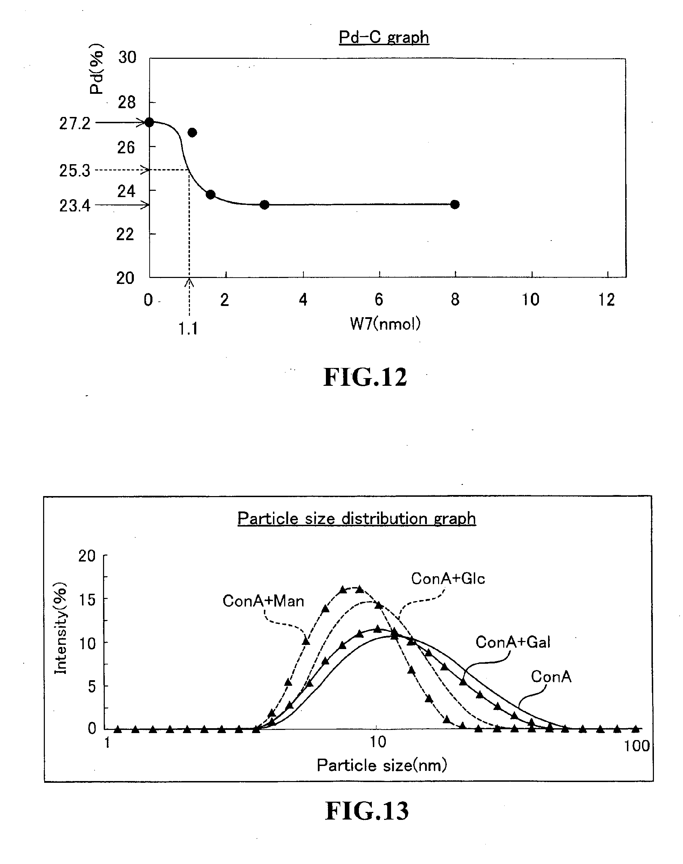

A plurality of Pd(%) were then calculated at different concentrations by titrating W7 diluted in the above mentioned buffer solution into the calmodulin (CaM). FIG. 12 is a Pd-C graph prepared by the protein analyzer of the embodiment shown in FIG. 1. The Pd-C graph of FIG. 12 was prepared by plotting the plurality of calculated Pd(%), and fitting the data in the sigmoid function f(x). From the Pd-C graph, the reduced Pd(%) was confirmed to be dependent on the increase in the amount (concentration) of titrated W7.

[Calculation of the Bonding Constant $K_{pd}$]

Pd(i)=27.2(%) and Pd(t)=23.4(%) were obtained from the Pd-C graph shown in FIG. 12, and the Pd(50) was calculated by equation (2) as shown below.

$$Pd(50) = (27.2+23.4)/2=25.3(\%)$$

The W7 concentration C (Pd50)=1.1 (nmol) corresponding to the Pd(50)=25.3 was obtained from the Pd-C graph shown in FIG. 12. Since total volume of the sample was 50 µl, the W7 concentration C (Pd50)=1.1/0.05=22µM. Since the calmodulin (CaM) concentration C (protein) was 59.9 µM, the bonding constant $K_{pd}$ which is the indicator of the strength of the bond between the calmodulin (CaM) and the W7 was calculated using equation (3) as shown below.

$$K_{pd} = 22/59.9 = 0.367$$

In this way the bonding constant $K_{pd}$ of the W7 and the calmodulin (CaM) was 0.367.

Example 2

An experiment conducted to observe the relationship between the strength of the bond between the substrate and the protein and the Pd(%) obtained by the $K_{pd}$ calculation application program 414b and the of the protein analyzer 1 of the above mentioned embodiment of the present invention is described below.

In this experiment, Pd(%) was calculated using equation (1) for a plurality of samples to which was added a plurality of substrates (sugars) having different characteristics of bonding to protein. Then, the relationship between the strength of the bond between the protein and substrate and the Pd(%) obtained by the present embodiment were evaluated by comparing evaluations by the conventional plate method for evaluating a calculated Pd(%) and the strength of the bond between a protein and substrate (Binding (A620), Hatayama et al., Analytical Biochemistry 237, pp. 188-192 (1996)).

The experiment of example 2 is outlined below. The measurement temperature in the apparatus main body 2 was 25°C. The measurement time was 10 seconds, and the average value of five measurement results was used. The laser output was a 4 mW He-Ne laser (633 nm). Furthermore, concanavalin A (ConA) prepared at 1 mg/mL was used as the protein, and 100 mM of three types of galactose (Gal, mannose (Man), and glucose (Glc) were used as the substrate. Moreover, 50 nM of HEPES (pH7.5) was used as a buffer solution.

FIG. 13 is a particle size distribution graph prepared by the protein analyzer of the embodiment shown in FIG. 1. The particle size distribution graph of FIG. 13 shows the particle size distributions of three types of samples, that is a sample containing only concanavalin A (ConA) prepared at 1 mg/mL, and sample to which three types of substrate (sugars) were added to the concanavalin A prepared at 1 mg/mL to obtain 0.1 mM respectively. From the particle size distribution graph shown in FIG. 13, the CPU 412 calculated the standard deviation SD (nm) and peak particle size Dh (nm) of each sample, and the Pd(%) of each sample was calculated using equation (1). The calculation results and the calculation results of each sample obtained by the convention plate method are compared in Table 2 below.

Table 2

| Sample | Pd(%) | Binding (A620) |
|---|---|---|
| ConA | 54.0 | - |
| ConA_Gal | 51.8 | 0.02 |
| ConA_Glc | 38.5 | 0.12 |
| ConA_Man | 33.2 | 0.36 |

A summary of the conventional plate method is described below. In the plate method, the substrates galactose (Gal), mannose (Man), and glucose (Glc) are fixed on the surface of a plate, and the target protein (ConA) is added. A gold colloid is thereafter added, and the gold colloid is absorbed by the protein. The bonding strength of the protein and substrate (sugar) is then calculated by irradiating with 620 (nm) ultraviolet light and measuring the amount of absorption. Note that bonding strength is greater the greater the numerical value in the plate method.

The trend of increasing strength of the bond between the protein and the substrate (sugar) as the Pd(%) decreases was confirmed from the comparison with the plate method shown in Table 2. That is, the correlative relationship between the Pd(%) and the bond strength of the protein and substrate (sugar) was confirmed. In this way it is considered possible to calculate an indicator related to the strength of the bond between the protein and substrate using Pd(%).

In the present embodiment described above, the bonding constant $K_{pd}$ which relates to the bond strength of the protein and substrate can be determined regardless of whether the substrate bonding to the protein is a complex substrate (polymer) or a simple substrate (monomer) since the bonding constant $K_{pd}$ is determined based on Pd(%) which relates to the particle size d (nm) of the bound body by providing the CPU 412 for obtaining the bonding constant $K_{pd}$ related to the bond strength of the protein and substrate based on a plurality of Pd(%) obtained from a plurality of samples which have different substrate concentrations C (nmol), and obtaining Pd(%) which relates to the distribution range of the particle size d (nm) of the bound body based on the particle size distribution graph which represents the state of the distribution of the particle size d of the bound body of the protein and the substrate. In this way it is possible to determine an indicator which represents the natural bond state of a protein and simple substrate approaching the *in vivo* state.

In the present embodiment, the Pd(%) which relates to the distribution range of the particle size d (nm) of the bound body can be determined in a single apparatus without providing a separate apparatus for obtaining a particle size distribution graph used to obtain the Pd(%) by configuring the CPU 412 so as to obtain the particle size distribution graph based on the optical information obtained by irradiating a sample with light.

In the present embodiment, a more accurate Pd(%) can be obtained even when the peak particle size Dh (nm) is different since the Pd(%) is obtained based on the peak particle size Dh (nm) in addition to the standard deviation SD (nm) by configuring the CPU 412 to obtain the standard deviation SD (nm) and the peak particle size Dh (nm) which represents the peak of the particle size distribution graph based on the particle size distribution graph, and obtain the Pd(%) based on the standard deviation SD (nm) and the peak particle size Dh (nm).

Note that embodiment and examples of the present disclosure are in all aspects examples and are not to the construed as limiting in any way. The scope of the present invention is defined by the scope of the claims and not by the description of the embodiment, and includes all modifications within the scope of the claims and the meanings and equivalences therein.

Although the above embodiment has been described by way of an example of a configuration providing a separate analysis application program and $K_{pd}$ calculation application program, the present invention is not limited to this example inasmuch as the functions of the $K_{pd}$ calculation application program may also be incorporated in the analysis application program. In this case the CPU of the control device executes the processes of FIG. 9 after calculating the standard deviation SD and the peak particle size Dh by executing the analysis application program.

Although the above embodiment has been described by way of an example of a configuration of the $K_{pd}$ calculation application program in which the CPU reads the standard deviation SD and peak particle size Dh for calculating the Pd from the RAM or hard disk, the present invention is not limited to this example inasmuch as the $K_{pd}$ calculation application program may also be configured so that the CPU reads the particle size distribution data from the RAM or hard disk, obtains the standard deviation SD and peak particle size Dh based on the data, then calculates the Pd.

Although the above embodiment has been described by way of an example using sugars and W7 as substrates, the present invention is not limited to this example inasmuch as other substances, for example, protein. DNA, RNA, inhibitor, ions and the like may also be used as substrates insofar as such substances are bonding substances which bond with proteins.

**Claims**

1. An analyzer comprising:

   a distribution range information acquirer for obtaining distribution range information related to a particle size distribution range of a bound body of a protein and a predetermined substrate based on particle size distribution information which represents a distribution state of particle size of the bound body,

   wherein the bound body is obtained from a sample containing at least the protein; and
   a bond strength information acquirer for obtaining bond strength information related to strength of a bond of the protein and the predetermined substrate based on plurality of distribution range information obtained from a plurality of samples in which the predetermined substrate has different concentrations.

2. The analyzer according to claim 1, further comprising
a particle size distribution information acquirer for obtaining particle size distribution information based on optical information obtained by irradiating the sample with light.

3. The analyzer according to claim 1 or 2, wherein
the bond strength information acquirer obtains bond strength information based on a relationship between the concentration of the predetermined substrate and distribution range information by using the plurality of distribution range information.

4. The analyzer according to any one of claims 1 to 3, wherein
the bond strength information acquirer obtains the concentration of the predetermined substrate which becomes a predetermined value of the distribution range information based on distribution range information obtained from a first sample and distribution range information obtained from a second sample, and obtains bond strength information based on the obtained concentration of the predetermined substrate,
wherein the first sample contains the protein but substantially does not contain the predetermined substrate and the second sample contains the protein and the predetermined substrate at an excess concentration which does not change distribution range information.

5. The analyzer according to claim 4, wherein
the predetermined value of distribution range information is an average value of distribution range information obtained from the first sample, and distribution range information obtained from the second sample.

6. The analyzer according to claim 4 or 5, wherein
the bond strength information acquirer obtains bond strength information based on the concentration of the protein and the concentration of the predetermined substrate which becomes the predetermined value of distribution range information.

7. The analyzer according to any one of claims 1 to 6,
wherein
the distribution range information acquirer obtains a peak particle size which represents a peak of particle size distribution and standard deviation of the particle size distribution, and obtains distribution range information based on the standard deviation and the peak particle size as particle size distribution information.

8. The analyzer according to any one of claims 1 to 7,
wherein
the predetermined substrate is a simple substrate.

9. The analyzer according to any one of claims 1 to 8,
wherein
the predetermined substrate is selected from among proteins, DNA, RNA, sugars, inhibitors and ions.

10. An analyzing method comprising:

(a) for obtaining distribution range information related to a particle size distribution range of a bound body of a protein and a predetermined substrate based on particle size distribution information which represents a distribution state of particle size of the bound body,
wherein the bound body is obtained from a sample containing at least the protein; and
(b) obtaining bond strength information related to strength of a bond of the protein and the predetermined substrate based on plurality of distribution range information obtained from plurality of samples in which the predetermined substrate has different concentrations.

11. The analysis method according to claim 10, further comprising

(c) obtaining particle size distribution information based on optical information obtained by irradiating the sample with light.

**12.** The analysis method according to claim 10 or 11, wherein
(b) comprises a step of obtaining bond strength information based on a relationship between the concentration of the predetermined substrate and distribution range information by using the plurality of distribution range information.

**13.** The analysis method according to any one of claims 10 to 12,
wherein
(b) comprises a step of obtaining the concentration of the predetermined substrate which becomes a predetermined value of distribution range information obtained from a first sample and distribution range information obtained from a second sample, and obtains the bond strength information based on the obtained concentration of the predetermined substrate,
wherein the first sample contains the protein but substantially does not contain the predetermined substrate and the second sample contains the protein and the predetermined substrate at an excess concentration which does not change the distribution range information.

**14.** A computer program product, comprising:

a computer readable medium; and
instructions, on the computer readable medium, adapted to enable a general purpose computer to perform operations, comprising:

(a) for obtaining distribution range information related to a particle size distribution range of a bound body of a protein and a predetermined substrate based on particle size distribution information which represents a distribution state of particle size of the bound body,
wherein the bound body is obtained from a sample containing at least the protein; and
(b) obtaining bond strength information related to a strength of a bond of the protein and the predetermined substrate based on plurality of distribution range information obtained from plurality of samples in which the predetermined substrate has different concentrations.

**15.** The computer program product according to claim 14, further comprising

(c) obtaining particle size distribution information based on optical information obtained by irradiating the sample with light.

**FIG.1**

EP 2 073 014 A1

Apparatus main body

APD | A/D converter | Correlator | I/O interface

31 | 31a

334

PC

3

Optical fiber coupler

30

32

33

332 | CPU

Laser

21

22

ROM | RAM

333

Control section

331

23

Laser drive circuit

34

29

200 | 251

251a

22

28 | 24 | 25 | 27

26

**FIG.2**

**FIG.3**

**FIG.4**

**FIG.5**

**FIG.6**

**Apparatus Main Body**

START

Measurement start signal received? — S11

Yes

Start irradiation — S12

Send scattered light data and G2($\tau$) — S13

Predetermined Time elapsed? — S14

No / Yes

End irradiation — S15

Shutdown? — S16

No / Yes

END

**Control Device (PC)**

START

Received and store sample information (protein concentration, substrate concentration — S1

Measurement start instruction — S2

No / Yes — S3

Send measurement start signal

Received scattered light data and G2($\tau$)? — S4

No / Yes

Predetermined time elapsed? — S5

No / Yes

Calculate particle size — S6

Prepare particle size distribution graph — S7

Calculate SD, Dh — S8

Associate particle size, SD, Dh with sample information, display and store — S9

Shutdown? — S10

No / Yes

END

**FIG.7**

**FIG.8**

Control device (PC)

```
                      ( START )
                          │
          ┌───────────────┤◄──────────────────────────────┐
   No     ▼         S21                                    │
  ┌──◄ Kpd calcuration                                     │
  │       instruction?                                     │
  │      │Yes ◄──────────────────────────┐                │
  │       ▼         S22                   │                │
  │    Received selection of sample    No │                │
  │      for Kpd calcuration? ──────────┘                 │
  │      │Yes                                              │
  │       ▼                          S23                   │
  │    Has the sample substrate                            │
  │    concentration been changed and ──────┐             │
  │    measured a predetermined             │             │
  │    number of times?                     │  S32        │
  │      │Yes          S24                   ▼            │
  │    Read SD, Dh, protein concentration,  Display message for measurement
  │    and substrate concentration          at predetermined substrate
  │       │                                 concentration
  │ S25   ▼                                  │            │
  └─  Calculate polydispersity               │            │
          │                                   │            │
          ▼                S26                │            │
      Prepare Pd-C graph                      │            │
          │                                   │            │
          ▼                S27                │            │
      Calculate Pd(50)                        │            │
          │                                   │            │
          ▼                S28                │            │
      Calculate C(Pd50)                       │            │
          │                                   │            │
          ▼                S29                │            │
      Calculate Kpd                           │            │
          │                                   │            │
          ▼                S30                │            │
      Display and store Kpd                   │            │
          │                                   │            │
          ▼◄──────────────────────────────────┘           │
          │         S31                                    │
      Shutdown? ─── No ──────────────────────────────────┘
          │Yes
          ▼
       ( END )
```

**FIG.9**

**FIG.10**

**FIG.11**

**FIG.12**

**FIG.13**

Europäisches
Patentamt

European
Patent Office

Office européen
des brevets

**EUROPEAN SEARCH REPORT**

Application Number

EP 08 02 1808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 214 560 B1 (YGUERABIDE JUAN [US] ET AL) 10 April 2001 (2001-04-10) * column 73, lines 43-65 * * column 75, lines 18-44 * ----- | 1-15 | INV. G01N33/68 ADD. G01N15/02 |
| X,D | JP 2007 057383 A (SYSMEX CORP) 8 March 2007 (2007-03-08) * the whole document * ----- | 1-15 | |
| A | US 2005/079526 A1 (SENISTERRA GUILLERMO [CA] ET AL) 14 April 2005 (2005-04-14) * the whole document * ----- | 1,10,14 | |

TECHNICAL FIELDS
SEARCHED      (IPC)

G01N

The present search report has been drawn up for all claims

| Place of search | Date of completion of the search | Examiner |
|---|---|---|
| Berlin | 12 March 2009 | Navas Montero, E |

EPO FORM 1503 03.82 (P04C01)

## ANNEX TO THE EUROPEAN SEARCH REPORT
## ON EUROPEAN PATENT APPLICATION NO.

EP 08 02 1808

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2009

| Patent document cited in search report | | Publication date | Patent family member(s) | Publication date |
|---|---|---|---|---|
| US 6214560 | B1 | 10-04-2001 | US   2009004757 A1 | 01-01-2009 |
| JP 2007057383 | A | 08-03-2007 | NONE | |
| US 2005079526 | A1 | 14-04-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007057383 A

**Non-patent literature cited in the description**

• **Hatayama et al.** *Analytical Biochemistry,* 1996, vol. 237, 188-192